# EUROPÄISCHE PATENTSCHRIFT

(11) **EP 2 531 760 B1**
(45) Veröffentlichungstag und Bekanntmachung des Hinweises auf die Patenterteilung: **15.07.2015**
(21) Anmeldenummer: 10800958.0
(22) Anmeldetag: 30.12.2010
(51) Int. Cl.: F16K 99/00, B01L 3/00

(54) **MIKROFLUIDISCHES BAUELEMENT ZUR HANDHABUNG EINES FLUIDS UND MIKROFLUIDISCHER CHIP**
MICRO-FLUIDIC COMPONENT FOR MANIPULATING A FLUID, AND MICROFLUIDIC CHIP
ELÉMENT STRUCTURAL MICROFLUIDIQUE CONÇU POUR LA MANIPULATION D'UN FLUIDE ET PUCE MICROFLUIDIQUE

(30) Priorität: 01.02.2010 DE 102010001412
(43) Veröffentlichungstag der Anmeldung: 12.12.2012
(73) Patentinhaber: Robert Bosch GmbH, 70442 Stuttgart (DE)
(72) Erfinder: ROTHACHER, Peter, 76646 Bruchsal (DE)
(86) Internationale Anmeldenummer: PCT/EP2010/070908
(87) Internationale Veröffentlichungsnummer: WO 2011/091943

(56) Entgegenhaltungen:
- DE-A1-102008 002 336
- US-A- 6 129 331
- US-A1- 2008 135 114
- YIZHE ZHENG ET AL: "A screw-actuated pneumatic valve for portable, disposable microfluidics", LAB ON A CHIP, ROYAL SOCIETY OF CHEMISTRY, CAMBRIDGE, GB, Bd. 9, 1. Januar 2009 (2009-01-01), Seiten 469-472, XP007906945, ISSN: 1473-0197, DOI: DOI:10.1039/B811526E [gefunden am 2008-11-07]

## Beschreibung

Die Erfindung betrifft ein mikrofluidisches Bauelement zur Handhabung eines Fluids und einen mikrofluidischen Chip.

### Stand der Technik

Die Mikrofluidik beschäftigt sich mit der Handhabung von Fluiden, also Flüssigkeiten oder Gasen, auf kleinstem Raum. Dabei werden Fluide bewegt, gemischt, getrennt oder anderweitig prozessiert. Mikropumpen fördern oder dosieren Fluide, Mikroventile bestimmen eine Richtung oder einen Bewegungsmodus von gepumpten Fluiden und Mikromischer ermöglichen ein gezieltes Vermengen von Fluidvolumina. Mikrofluidische Bauelemente finden unter anderem in der Biotechnologie und der Medizintechnik Anwendung.

Aus der älteren deutschen Patentanmeldung DE 10 2008 002 336.1-12 ist ein mikrofluidisches Bauelement in Form eines Quetschventils bekannt, welches ein erstes, zweites und drittes Substrat aufweist, wobei das dritte Substrat aus einem elastischen Material ausgebildet ist und zwischen dem ersten und zweiten Substrat angeordnet ist. Das erste Substrat grenzt dabei an das dritte Substrat an und weist an der an das dritte Substrat angrenzenden Seite mindestens eine erste Aussparung auf. Das zweite Substrat grenzt ebenfalls an das dritte Substrat an und weist an der an das dritte Substrat angrenzenden Seite mindestens eine zweite Aussparung auf. Die erste Aussparung und die zweite Aussparung sind dabei einander zumindest teilweise gegenüber angeordnet. Zum Zwecke der Offenbarung wird diese ältere Anmeldung vollumfänglich in die vorliegende Anmeldung einbezogen.

Aus dem Dokument US 2008/0135114 A1 ist ein hydraulisch aktuierbares Mikroventil bekannt.

### Offenbarung der Erfindung

Die vorliegende Erfindung schafft ein mikrofluidisches Bauelement zur Handhabung eines Fluids, insbesondere eine Mikropumpe, ein Mikroventil oder einen Mikromischer, mit einem ersten Substrat, einem zweiten Substrat und einem zwischen dem ersten Substrat und dem zweiten Substrat angeordneten dritten Substrat, welches aus einem elastischen Material ausgebildet ist. Auf der dem dritten Substrat zugewandten Seite des ersten Substrats ist mindestens eine erste Aussparung ausgebildet, welche eine erste Steuerkammer bildet. Auf der dem dritten Substrat zugewandten Seite des zweiten Substrats ist mindestens eine zweite Aussparung ausgebildet, welche einen Fluidkanal oder eine Fluidkammer für das zu handhabende Fluid bildet und welche sich mit der ersten Steuerkammer zumindest in Teilbereichen überlappt. In dem ersten Substrat sind zusätzlich eine von der ersten Steuerkammer räumlich getrennte zweite Steuerkammer sowie ein Steuerkanal ausgebildet, wobei der Steuerkanal die erste Steuerkammer mit der zweiten Steuerkammer verbindet. Die Steuerkammer und der Steuerkanal bilden ein geschlossenes System und sind mit einem Steuerfluid gefüllt. Zumindest eine Seitenwand der zweiten Steuerkammer ist aus elastischem Material ausgebildet und durch einen Aktuator, insbesondere ein mechanisches Aktivierungsglied eines Aktuators, derart verformbar, dass sich das Innenvolumen der zweiten Steuerkammer verringert und sich dadurch der Druck des Steuerfluids erhöht.

Dem erfindungsgemäßen mikrofluidischen Bauelement liegt das Prinzip zugrunde, dass sich der zwischen dem Fluidkanal oder der Fluidkammer und der ersten Steuerkammer angeordnete Bereich des dritten, elastischen Substrates bei unterschiedlichen Drücken in den Kammern in diejenige Kammer mit dem jeweils geringerem Druck hineindehnen kann. Durch geeignete Anordnung und Ausgestaltung von Fluidkanälen oder Fluidkammern kann auf diese Weise beispielsweise eine Mikropumpe, ein Mikroventil oder ein Mikromischer realisiert werden. Die erste Steuerkammer bildet dabei gemeinsam mit der zweiten Steuerkammer und dem die beiden Kammern miteinander verbindenden Steuerkanal ein geschlossenes System, wobei eine Seitenwand der zweiten Steuerkammer aus elastischem Material ausgebildet ist. Durch Verformung dieser Seitenwand kann das Innenvolumen der zweiten Steuerkammer verringert und auf diese Weise der Druck in dem geschlossenen System und damit auch in der ersten Steuerkammer erhöht werden. Die zur Aktivierung des mikrofluidischen Bauelements erforderliche Verformung der verformbaren Seitenwand der zweiten Steuerkammer wird dabei durch einen Aktuator realisiert, der zum Beispiel elektrisch, magnetisch, piezoelektrisch oder auch durch ein elektroaktives Polymer angetrieben werden kann. Letztendlich führt die erfindungsgemäße Anordnung zu einer räumlichen Trennung der Aktuatorik des mikrofluidischen Bauelements von dem Handhabungsbereich des zu handhabenden Fluids, also zum Beispiel dem Ventilbereich, dem Pumpbereich oder dem Mischbereich. Lediglich die erste Steuerkammer ist im Bereich der eigentlichen Mikropumpe, des eigentlichen Mikroventils oder des eigentlichen Mikromischers angeordnet, wohingegen die zweite Steuerkammer, auf welche die Aktuatorik einwirkt an einer beliebigen anderen Position auf einem mikrofluidischen Chip, insbesondere einem Biochip, auf welchem das mikrofluidische Bauelement realisiert ist, vorgesehen werden kann. Auf einem mikrofluidischen Chip können selbstverständlich auch mehrere erfindungsgemäße mikrofluidische Bauelemente angeordnet sein.

Diese räumliche Trennung der Aktuatorik von dem eigentlichen Handhabungsort des Fluids ermöglicht eine bessere Entflechtung der Steuerkammern und - kanäle, welche das Steuerfluid im Chip beinhalten, von den Fluidkanälen und - kammern, welche das zu handhabende Fluid im Chip aufnehmen. Dadurch wiederum können die zweiten Steuerkammern und damit die Angriffspunkte der Aktuatoren an vordefinierten, standardisierten Positionen eines mikrofluidischen Chips positioniert werden, was es ermöglicht, unterschiedliche Anwendungen also unterschiedliche mikrofluidische Bauelemente mit einer einheitlichen Aktuatorik zu aktivieren.

Auf einem Chip können auch mehrere mikrofluidische Bauelemente, zum Beispiel Mikroventile, in sehr geringen Abständen zueinander angeordnet sein. Aufgrund der häufig relativ großen Aktuatorik kann es dabei bei herkömmlicher Aktuierung unmittelbar am Handhabungsort zu Problemen beim Chipdesign kommen. Diese Probleme werden durch Trennung der Aktuatorik von den eigentlichen mikrofluidischen Bauelementen und der dadurch möglichen Entflechtung des Chips gelöst.

Die durch Verformung einer Seitenwand der zweiten Steuerkammer realisierte Aktuierung des mikrofluidischen Bauelements führt auch dazu, dass der Aktuator nicht mehr unmittelbar in den Chip integriert werden muss, sondern vorteilhaft mit dem mikrofluidischen Bauelement nur lose verbindbar ist. Mikrofluidische Bauelemente sowie die Chips, welche sie tragen, werden insbesondere bei Anwendung im biotechnologischen oder medizintechnischen Bereich, häufig als Wegwerfkartuschen ausgeführt. Die lose Verbindbarkeit des Aktuators mit dem mikrofluidischen Bauelement und die damit einhergehende Trennbarkeit der beiden Einheiten nach erfolgter Aktivierung ermöglicht es, die Aktuatorik in Form eines wieder verwendbaren, vorteilhaft tragbaren, Bediengerätes auszuführen. Bei entsprechender Auslegung der Chips, insbesondere entsprechender Anordnung der zweiten Steuerkammern der auf einem Chip angeordneten mikrofluidischen Bauelemente, kann das Bediengerät sogar universell für unterschiedliche mikrofluidische Chips eingesetzt werden, was den erforderlichen Kostenaufwand erheblich reduziert. Das Bediengerät kann dabei einen einzigen Aktuator mit ggf. mehreren Aktivierungsgliedern, aber auch mehrere Aktuatoren mit jeweils einem oder mehreren Aktivierungsgliedern umfassen.

Gemäß einer Ausführungsform der Erfindung ist die zweite Steuerkammer durch eine dritte Aussparung gebildet, welche auf der dem dritten Substrat zugewandten Seite des ersten Substrats beabstandet zur ersten Steuerkammer ausgebildet ist. Ebenso kann auch der Steuerkanal durch eine Aussparung gebildet werden, welche auf der dem dritten Substrat zugewandten Seite des ersten Substrats zwischen der ersten und dritten Aussparung ausgebildet ist. Diese Ausführungsformen bieten vor allem fertigungstechnische Vorteile, da die Aussparungen mit geringem fertigungstechnischem Aufwand realisierbar sind. Es ist aber auch denkbar, dass die zweite Steuerkammer und/oder der Steuerkanal nicht als Aussparungen an der dem dritten Substrat zugewandten Seite des ersten Substrats ausgestaltet sind, sondern im Inneren des ersten Substrats angeordnet sind. Lediglich die verformbare Seitenwand der zweiten Steuerkammer muss von außen zugänglich sein.

Gemäß einer weiteren Ausführungsform der Erfindung ist die verformbare Seitenwand der zweiten Steuerkammer durch das dritte Substrat gebildet. Durch die Verwendung des ohnehin elastisch ausgeführten dritten Substrats als verformbare Seitenwand der zweiten Steuerkammer ist ein besonders einfacher Aufbau des erfindungsgemäßen mikrofluidischen Bauelements erreichbar, was zu einem relativ geringen Herstellungsaufwand führt. Zur Aktuierung des mikrofluidischen Bauelementes kann in dem zweiten Substrat entweder eine Durchgangsöffnung vorgesehen sein, welche sich zumindest teilweise mit der zweiten Steuerkammer überlappt und über welche der Aktuator unmittelbar auf das dritte Substrat verformend einwirken kann. Alternativ dazu kann auf der dem dritten Substrat abgewandten Seite des zweiten Substrats auch eine Aussparung vorgesehen sein, welche sich zumindest teilweise mit der zweiten Steuerkammer überlappt und deren Ausdehnung in Richtung des dritten Substrats derart festgelegt ist, dass sich zwischen der Aussparung und dem dritten Substrat ein stegartiger Bereich des zweiten Substrats ergibt, auf welche ein Aktuator verformend einwirken kann. In diesem Fall wird die Verformung des als Seitenwand der zweiten Stauerkammer dienenden dritten Substrats indirekt über eine Verformung des stegartigen Bereiches des zweiten Substrats bewirkt.

Alternativ dazu kann die verformbare Seitenwand der zweiten Steuerkammer aber auch unmittelbar durch eine Außenwand des ersten Substrats gebildet werden.

Die Ausführungsformen, bei welchen der Aktuator auf einen Teilbereich des ersten oder zweiten Substrats und nicht oder zumindest nicht unmittelbar auf das dritte Substrat einwirkt, sind vor allem dann vorteilhaft, wenn höhere Rückstellkräfte innerhalb des mit dem Steuerfluid gefüllten geschlossenen Systems erforderlich sind.

Als Steuerfluid können sowohl Gase als auch Flüssigkeiten eingesetzt werden. Gemäß einer bevorzugten Ausführungsform wird Luft als Steuerfluid verwendet, so dass das mikrofluidische Bauelement pneumatisch aktuiert wird. Dies bietet den Vorteil, dass auf einen aufwändigen Füllvorgang der Steuerkammern und des Steuerkanals verzichtet werden kann. Bei Verwendung inkompressibler oder nahezu inkompressibler Flüssigkeiten als Steuerfluid können die Volumina der Steuerkammern gegenüber einer Befüllung mit Gasen verringert werden. Andererseits ergeben sich dadurch aber auch höhere Strömungswiderstände, was zu Verlängerungen der Schaltzeiten führt.

-Erfindungsgemäß weist das mikrofluidische Bauelement ein zusätzliches Druckausgleichsventil auf, welches über einen ersten Druckausgleichskanal (66) mit der ersten Steuerkammer (4'), der zweiten Steuerkammer (8') oder dem Steuerkanal (9') verbunden ist und über einen zweiten Druckausgleichkanal (67) mit der Außenumgebung verbunden ist.

Weitere Merkmale und Vorteile von Ausführungsformen der Erfindung ergeben sich aus der nachfolgenden Beschreibung mit Bezug auf die beigefügten Figuren.

### Kurze Beschreibung der Figuren.

Es zeigen:
- Fig. 1: einen schematischen Querschnitt durch den ersten Teil einer ersten Ausführungsform eines erfindungsgemäßen mikrofluidischen Bauelements in Form eines Mikroventils in nicht aktiviertem Zustand,
- Fig. 2: einen schematischen Querschnitt durch den in Fig. 1 gezeigten ersten Teil der ersten Ausführungsform eines erfindungsgemäßen Bauelements in aktiviertem Zustand,
- Fig. 3: einen schematischen Querschnitt durchden ersten Teil einer zweiten Ausführungsform eines erfindungsgemäßen mikrofluidischen Bauelements in Form eines Mikroventils in aktiviertem Zustand,
- Fig. 4: einen schematischen Querschnitt durch den ersten Teil einer dritten Ausführungsform eines erfindungsgemäßen mikrofluidischen Bauelements in Form eines Mikroventils in nicht aktiviertem Zustand,
- Fig. 5: eine schematische perspektivische Darstellung eines nicht erfindungsgemäßen mikrofluidischen Chips mit mehreren mikrofluidischen Bauelementen und zugehörigen Aktuatoren.
- Fig.6-7: einen schematischen Querschnitt durch das Druckausgleichsventil einer Ausführungsform des erfindungsgemäßen mikrofluidischen Bauelements,
- Fig. 8: eine schematische perspektivische Darstellung des Druckausgleichsventils einer Ausführungsform des erfindungsgemäßen mikrofluidischen Bauelements,
- Fig. 9: eine schematische perspektivische Darstellung eines erfindungsgemäßen mikrofluidischen Chips mit mehreren mikrofluidischen Bauelementen und zugehörigen Aktuatoren

### Beschreibung der Ausführungsbeispiele

In den Figuren sind identische oder funktionsgleiche Komponenten jeweils mit dem gleichen Bezugszeichen gekennzeichnet.

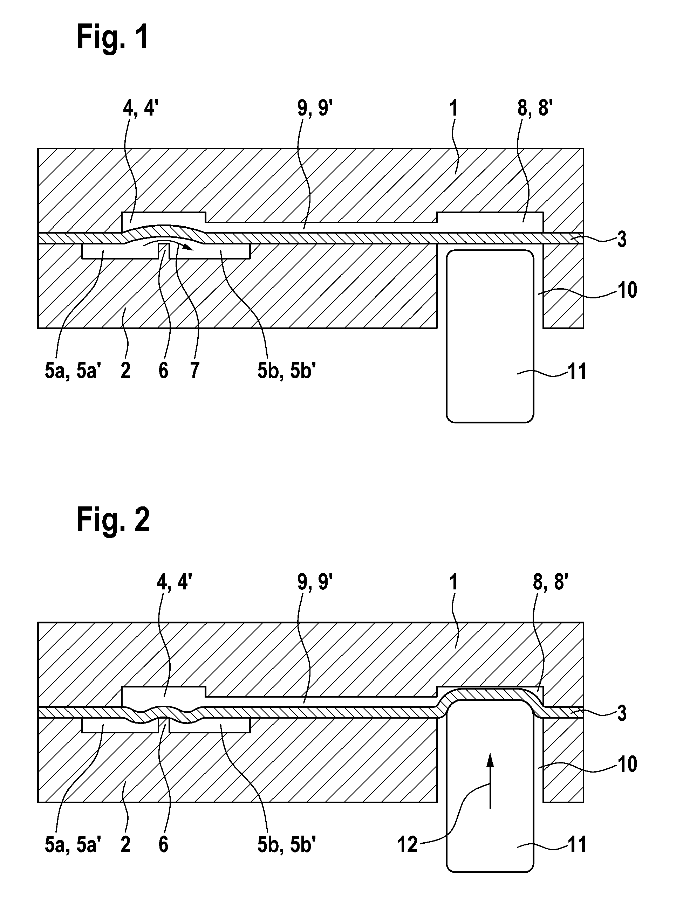

Fig. 1 zeigt einen schematischen Querschnitt durch den ersten Teil einer ersten Ausführungsform eines erfindungsgemäßen mikrofluidischen Bauelements in Form eines Mikroventils im nicht aktivierten Zustand. Das dargestellte Mikroventil umfasst ein erstes Substrat 1, ein zweites Substrat 2 und ein zwischen dem ersten Substrat und dem zweiten Substrat angeordnetes drittes Substrat 3. Das erste und zweite Substrat können beispielsweise aus einem Thermoplast ausgeführt sein. Das dritte Substrat 3 ist aus einem elastischen Material, insbesondere als thermoplastische Elastomerfolie, ausgebildet und, insbesondere sandwichartig, zwischen dem ersten Substrat 1 und dem zweiten Substrat 2 angeordnet. Dabei grenzt das erste Substrat 1 an das dritte Substrat 3 an und weist an der an das dritte Substrat angrenzenden Seite eine erste Aussparung 4 auf, welche eine erste Steuerkammer 4' bildet. Ebenso grenzt das zweite Substrat 2 an das dritte Substrat 3 und weist an der an das dritte Substrat 3 angrenzenden Seite zwei Aussparungen 5a und 5b auf, welche Fluidkanäle oder Fluidkammern 5a' bzw. 5b' für das zu handhabende Fluid bilden. Die Aussparungen 5a und 5b sind dabei benachbart angeordnet und durch einen Steg 6 getrennt, wobei beide Aussparungen 5a und 5b sich zumindest teilweise mit der ersten Aussparung 4 überlappen. Bei der gezeigten Ausführungsform handelt es sich um ein sogenanntes "Narmally on"-Mikroventil. Das heißt, dass das Mikroventil, welches im dargestellten Ausführungsbeispiel als Quetschventil ausgeführt ist, ist im nicht aktivierten Zustand, also bei Normaldruck in der ersten Steuerkammer 4' offen ist und durch eine Druckerhöhung in der ersten Steuerkammer 4', wie in Fig 2 gezeigt, aktiviert und damit teilweise oder vollständig geschlossen wird. Wie in Fig. 1 schematisch dargestellt, führt eine Druckerhöhung des zu handhabenden Fluids in der Aussparung 5a dazu, dass sich das elastische Substrat 3 in die erste Aussparung 4 hinein ausdehnt und auf diese Weise einen Fluss des zu handhabenden Fluids aus der Aussparung 5a in die Aussparung 5b ermöglicht (angedeutet durch einen Pfeil 7).

Beabstandet zur ersten Aussparung ist in dem ersten Substrat 1 eine weitere Aussparung 8 vorgesehen, welche eine zweite Steuerkammer 8' bildet. Zwischen der ersten Aussparung 4 und der dritten Aussparung 8 ist eine vierte Aussparung 9 vorgesehen, welche als Steuerkanal 9' dient und die erste Steuerkammer 4' mit der zweiten Steuerkammer 8' verbindet, so dass die beiden Steuerkammern 4' und 8' zusammen mit dem Steuerkanal 9' ein geschlossenes System bilden Steuerkammer 8' ein größeres Innenvolumen aufweist als die erste Steuerkammer 4'. Der Steuerkanal 8' ist in seinem Querschnitt geringer als die beiden Steuerkammern 4' und 8'. Die beiden Steuerkammern 4' und 8' sowie der Steuerkanal 9' sind mit einem Steuerfluid, welches gasförmig oder flüssig ausgeführt sein kann, gefüllt. Vorteilhaft wird als Steuerfluid Luft verwendet, da auf diese Weise ein aufwändiger Füllvorgang der beiden Steuerkammern 4' und 8' sowie des Steuerkanals 9' entfallen kann.

In dem zweiten Substrat 2 ist eine Durchgangsöffnung 10 vorgesehen, welche im dargestellten Ausführungsbeispiel genau gegenüber der zweiten Steuerkammer 8' angeordnet ist. Über diese Durchgangsöffnung 10 kann ein mechanisches Aktivierungsglied 11, zum Beispiel in Form eines Stößels, eines nicht weiter dargestellten Aktuators auf das elastische Substrat 3 verformbar einwirken. Das elastische Substrat 3 bildet bei dem in den Figuren 1 und 2 dargestellten Ausführungsbeispiel eine elastisch verformbare Seitenwand der zweiten Steuerkammer 8'. Wird das mechanische Aktivierungsglied 11 des Aktuators in Richtung des Pfeils 12 (Figur 2) auf das elastische Substrat 3 gedrückt, so wird dieses in die zweite Steuerkammer 8' hineinbewegt. Dadurch verringert sich das Innenvolumen der zweiten Steuerkammer 8', was wiederum zu einer Druckerhöhung des Steuerfluids in dem geschlossenen System, bestehend aus den beiden Steuerkammern 4' und 8' sowie dem Steuerkanal 9', führt. Diese Druckerhöhung des Steuerfluids hat zur Folge, dass sich das elastische Substrat 3 im Bereich der ersten Steuerkammer 4' in die beiden Aussparungen 5a und 5b hineinbewegt, was zu einem Verschließen des Ventils führt. Bei der in den Figuren 1 und 2 gezeigten ersten Teil der

Ausführungsform eines erfindungsgemäßen mikrofluidischen Bauelementes ist die Durchgangsöffnung 10 derart ausgeführt, dass sie in horizontaler Richtung also in Richtung parallel zum elastischen Substrat 3 die selbe Ausdehnung wie die dritte Aussparung 8 aufweist und genau gegenüber dieser Aussparung 8 angeordnet ist. Alternativ dazu kann die Durchgangsöffnung 10 aber in horizontaler Richtung auch gegenüber der Aussparung 9 verschoben sein und/oder auch eine kleinere oder größere horizontale Ausdehnung aufweisen Entscheidend für die Funktionsfähigkeit ist lediglich, dass sich die Durchgangsöffnung 10 zumindest teilweise mit der Aussparung 9 überlappt, so dass das Aktivierungsglied 11 auf das elastische Substrat 3 derart einwirken kann, dass die elastische Membran 3 in den Bereich der dritten Aussparung 8 gedrückt werden kann. Vorteilhaft ist die Durchgangsöffnung 10 hinsichtlich ihrer horizontalen Ausdehnung derart ausgebildet, dass sie zugleich als Führung für das Aktivierungsglied 11 des Aktuators dient.

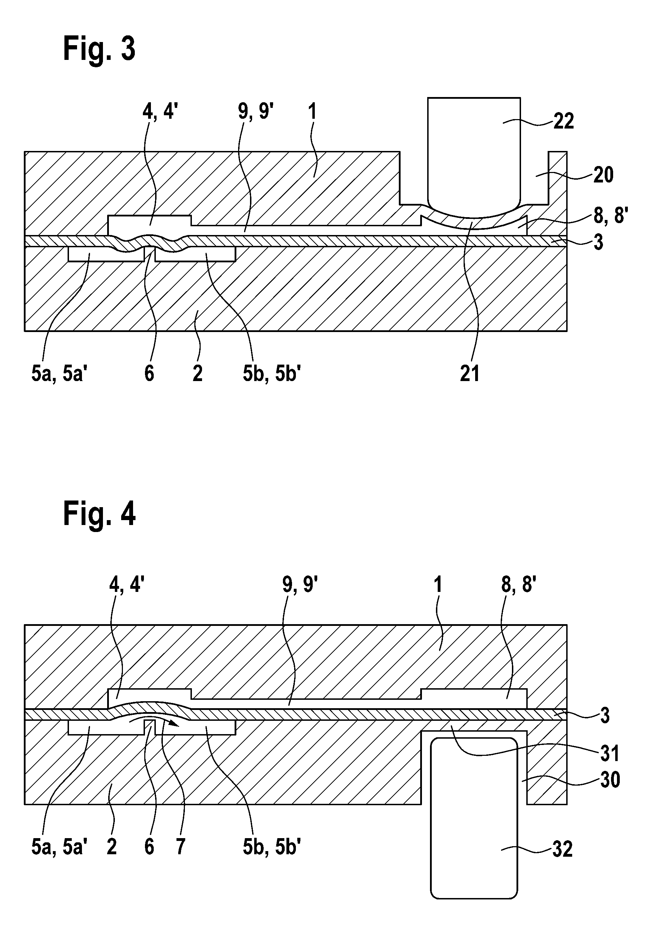

Figur 3 zeigt den ersten Teil einer alternativen Ausführungsform eines erfindungsgemäßen mikrofluidischen Bauelements, welches analog zu den Figuren 1 und 2 als mikrofluidisches Quetschventil ausgestaltet ist. Im Gegensatz zur ersten Ausführungsform ist aber in dem zweiten Substrat 2 keine Durchgangsöffnung vorgesehen, so dass das elastische Substrat 3 nicht als elastisch verformbare Seitenwand der zweiten Steuerkammer 8' genutzt werden kann. Stattdessen ist in dem ersten Substrat 1 eine fünfte Aussparung 20 vorgesehen, welche auf der dem dritten Substrat 3 abgewandten Seite des ersten Substrats angeordnet ist und zwar derart, dass sie sich zumindest in Teilbereichen mit der zweiten Steuerkammer 8' überlappt. Die Tiefe der Aussparung, das heißt die Ausdehnung der fünften Aussparung 20 in Richtung zum elastischen Substrat 3 hin, ist dabei derart festgelegt, dass sich zwischen der fünften Aussparung 20 und der zweiten Steuerkammer 8' ein stegartiger Bereich 21 des ersten Substrates 1 ergibt, welcher einerseits einen Teil der Außenwand des ersten Substrates 1 bildet, andererseits aber auch als verformbare Seitenwand der zweiten Steuerkammer 8' dient. Auf diese Weise kann ein Aktivierungsglied 22 eines Aktuators auf den stegartigen Bereich 21 des ersten Substrats derart einwirken, dass der stegartige Bereich 21 in den Bereich der Steuerkammer 8' gedrückt wird. Das wiederum führt zu einer Verringerung des Innenvolumens der zweiten Steuerkammer 8', damit zu einer Erhöhung des Druckes des Steuerfluids und somit letztendlich zu einem Schließen des Ventils analog zur ersten Ausführungsform. Bei der in Figur 3 dargestellten Ausführungsform ist die horizontale Ausdehnung der fünften Aussparung 20 größer als die horizontale Ausdehnung der dritten Aussparung 8 ausgeführt. Auch bei dieser Ausführungsform kann alternativ dazu die horizontale Ausdehnung der fünften Aussparung 20 auch gleich groß oder kleiner als die horizontale Ausdehnung der zweiten Steuerkammer 8' sein. Entscheidend für die Funktionsfähigkeit ist auch hier lediglich, dass sich die fünfte Aussparung 20 zumindest teilweise mit der dritten Aussparung 8 überlappt, so dass das Aktivierungsglied 11 auf den stegartigen Bereich 21 des ersten Substrats 1 derart einwirken kann, dass der stegartige Bereich 21 in den Bereich der dritten Aussparung 8 gedrückt werden kann.

Figur 4 zeigt den ersten Teil einer dritten Ausführungsform eines erfindungsgemäßen mikrofluidischen Bauelements, welches analog zu den Figuren 1 bis 3 als mikrofluidisches Quetschventil ausgestaltet ist. Im Gegensatz zur ersten Ausführungsform ist aber in dem zweiten Substrat 2 keine Durchgangsöffnung vorgesehen, sondern lediglich eine sechste Aussparung 30, welche auf der dem dritten Substrat 3 abgewandten Seite des zweiten Substrats 2 angeordnet ist und zwar derart, dass sie sich zumindest in Teilbereichen mit der zweiten Steuerkammer 8' überlappt. Die Tiefe der Aussparung, das heißt die Ausdehnung der sechsten Aussparung 30 in Richtung zum elastischen Substrat 3 hin, ist dabei derart festgelegt, dass sich zwischen der sechsten Aussparung 30 und dem dritten Substrat ein stegartiger Bereich 31 des zweiten Substrates 2 ergibt, welcher einen verformbaren Teil der Außenwand des zweiten Substrates 2 bildet. Ein Aktivierungsglied 32 eines Aktuators kann auf den stegartigen Bereich 31 des zweiten Substrats 2 derart einwirken, dass der stegartige Bereich 31 in Richtung des dritten Substrats 3 und damit das dritte Substrat 3 in den Bereich der Steuerkammer 8' gedrückt wird. Das führt wiederum zu einer Verringerung des Innenvolumens der zweiten Steuerkammer 8', damit zu einer Erhöhung des Druckes des Steuerfuids und somit letztendlich zu einem Schließen des Ventils analog zu den bereits beschriebenen Ausführungsform.

Neben den in den Figuren 1 bis 4 dargestellten Ausführungsformen sind weitere alternative Ausführungsformen denkbar. Entscheidend ist letztendlich immer nur, dass die verformbare Seitenwand der zweiten Steuerkammer entweder unmittelbar oder mittelbar, zum Beispiel über eine stegartig über der verformbaren Seitenwand liegenden Außenwand des zweiten Substrates, von außen zugänglich ist, so dass ein Aktuator oder ein Aktivierungsglied eines Aktuators auf diese Seitenwand einwirken kann.

Die Erfindung wurde unter Bezugnahme auf die Figuren 1 bis 4 beispielhaft für ein mikrofluidisches Quetschventil erläutert. Durch entsprechende Anpassungen hinsichtlich Anordnung und Ausgestaltung der Fluidkanäle oder Fluidkammern 5a und 5b sowie der ersten Steuerkammer 4' ist es dem Fachmann aber ohne weiteres möglich, auch andere Ventilausführungen oder auch Mikropumpen oder Mikromischer zu realisieren.

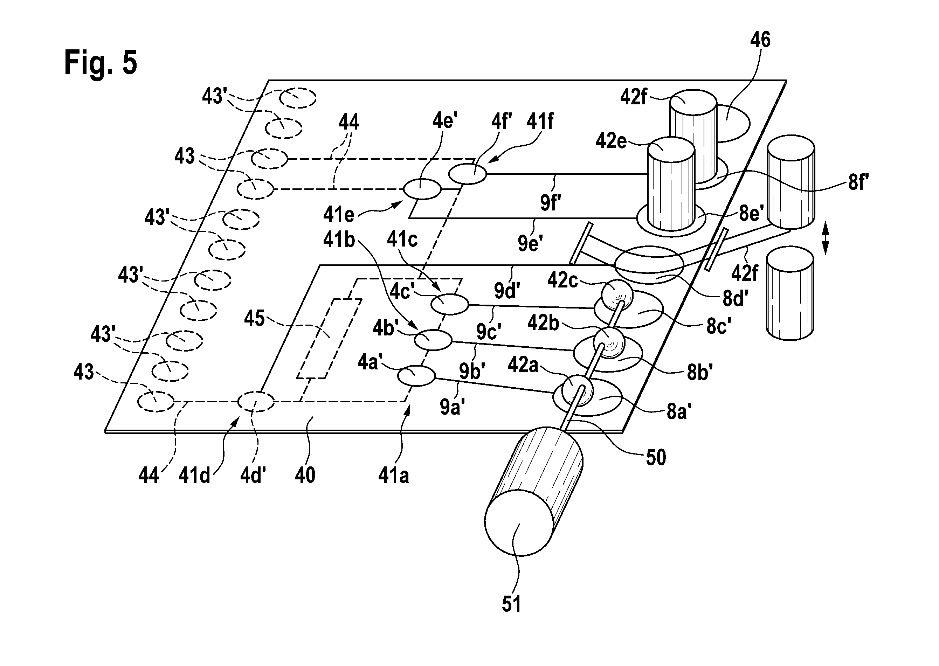

Figur 5 zeigt schematisch eine perspektivische Ansicht eines nicht erfindungsgemäßen mikrofluidischen Chips 40, insbesondere eines Biochips, mit mehreren mikrofluidischen Bauelementen 41a-f. Beispielhaft seien die mikrofluidischen Bauelemente 41 a-c als Mikropumpen und die mikrofluidischen Bauelemente 41 d-f als Mikroventile ausgeführt. In Fig. 5 sind diejenigen Fluidkanäle und Fluidkammern, welche das zu handhabende Fluid führen, mit gestrichelten Linien dargestellt Die das Steuerfluid führenden Kammern und Kanäle sind dagegen mit durchgezogenen Linien dargestellt. Dabei wird die durch die erfindungsgemäßen mikrofluidischen Bauelemente mögliche Entflechtung der steuernden Elemente von den zu steuernden Elementen, also den Elementen, welche das zu handhabende Fluid führen, besonders deutlich. So sind die zweiten Steuerkammern 8a' bis 8f, auf welche die Aktivierungsglieder 42a-f einer Aktuatorik einwirken, beispielhaft auf der in der rechten Seite des Chips angeordnet, wohingegen Anschlüsse 43 für das zu handhabende Fluid auf der gegenüberliegenden linken Seite des Chips vorgesehen sind. Durch geeignete Strukturierung von Fluidkanälen 44, und Fluidkammem 45 sowie der Steuerkanäle 9a' bis 9f und ersten Steuerkammern 4a' bis 4f ist es auf diese Weise möglich, bei gleich bleibender Positionierung der Fluidanschlüsse und der Angriffspunkte für die Aktivierungsglieder einer Aktuatorik mikrofluidische Chips mit unterschiedlicher Beschaltung, also unterschiedlicher Anordnung und/oder Ausgestaltung der auf dem Chip angeordneten mikrofluidischen Bauelemente, zu realisieren. Auf diese Weise kann mit einem einheitlichen Bediengerät, welches eine Aktuatorik aufnimmt, eine Vielzahl unterschiedlicher mikrofluidischer Chips betrieben werden. Vorteilhaft ist die Aktuatorik derart ausgeführt, dass sie lose mit dem Chip oder einem einzelnen mikrofluidischen Bauelement verbindbar ist, aber von diesem auch wieder trennbar ist. Auf diese Weise kann der Chip als Wegwerfkartusche realisiert sein, was insbesondere im biotechnologischen und medizintechnischen Einsatzbereich die Regel ist. Die Aktuatorik hingegen kann in Form eines wiederverwendbaren, insbesondere universell wieder verwendbaren Bediengerätes realisiert werden. Bei rein pneumatischer Aktuierung, also Befüllung der Steuerkammern 4 und 8 sowie der Steuerkanäle 9' mit Luft, kann das Bediengerät beispielsweise batteriegetrieben sein und unabhängig von Druckluftquellen oder Luftpumpen betrieben werden.

Die Aktuatoren sowie deren Aktivierungsglieder können sehr vielfältig ausgeführt sein. So ist es vorstellbar, eine Welle 50 vorzusehen, welche über einen Elektromotor 51 gegebenenfalls auch in Verbindung mit Übersetzungen, Umlenkein richtungen, Hebeln oder Pleueln, betrieben wird. Die Welle 50 kann dabei mit entsprechend ausgestalteten Exzentern versehen sein, welche als Aktivierungsglieder 42a-c dienen. Eine derartige Aktuatorik ist beispielsweise für Mikropumpen mit kontinuierlichem oder teilkontinuierlichem Betrieb einsetzbar und in Figur 5 beispielhaft als Aktuatorik für die Mikropumpen 41 a -c dargestellt. Dabei wird auch deutlich, dass ein Aktuator auch mehrere Aktivierungsglieder zur Akt vierung mehrerer mikrofluidischer Bauelemente aufweisen kann. Des Weiteren können auch magnetische Aktuatoren eingesetzt werden, wie sie in Figur 5 beispielhaft für die Mikroventile 41d-f dargestellt sind. Magnetische Aktuatoren erlauben weiterhin auch einen bistabilen Einsatz. Ein derart ausgestalteter Aktuator ist in Figur 5 schematisch für das Mikroventil 41 d dargestellt. Darüber hinaus sind aber auch andere Aktuatorprinzipien wie Piezo-Aktuatoren, auch basierend auf piezoelektrischen Polymeren, oder auch elektroaktive Polymere (EAP) setzbar. In Figur 5 sind auch Anschlüsse 43' für ein zu handhabendes Fluid und ein möglicher Einwirkungsbereich 46 eines weiteren Aktuators dargestellt, welche bei der dargestellten Beschattung des Chips aber nicht genutzt werden.

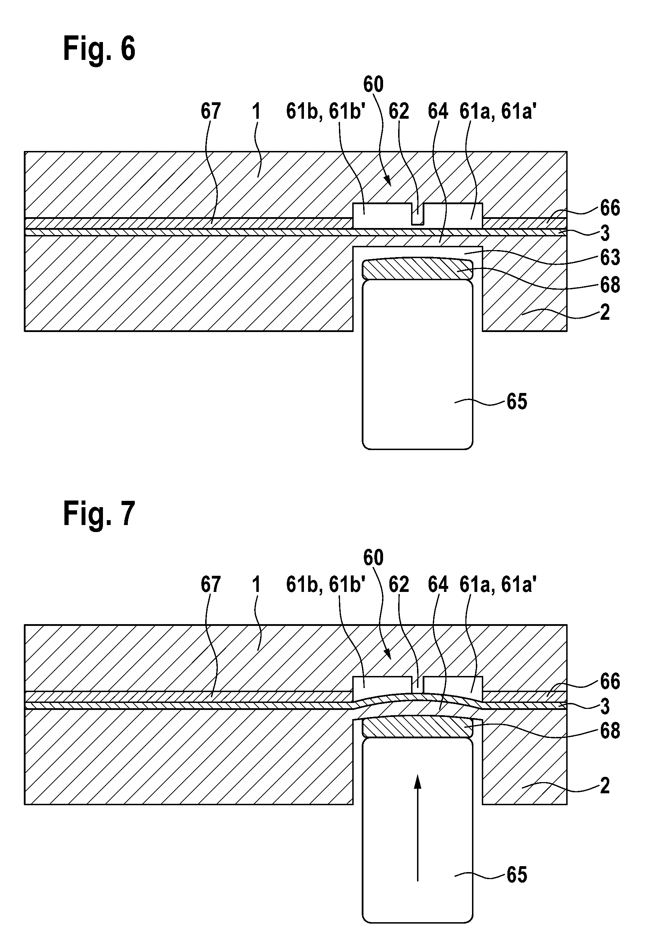

Das erfindungsgemäße mikrofluidische Bauelement weist zusätzlich ein Druckausgleichsventil auf, welches zum Druckausgleich zwischen dem pneumatischen System, bestehend aus den Steuerkammern (4', 8') sowie dem Steuerkanal (9'), und der Außenumgebung dient. Eine mögliche Ausführungsform eines derartigen Druckausgleichsventils ist in den Figuren 6 und 7 dargestellt. Dabei zeigt Figur 6 ein Druckausgleichsventil 60 in geöffnetem Zustand und Figur 7 das Druckausgleichsventil 60 in geschlossenem Zustand. Zur Vereinfachung der Darstellung ist in den Figuren 6 und 7 lediglich der Bereich des mikrofluidischen Bauelementes dargestellt, in welchem das Druckausgleichsventil dargestellt ist.

Gemäß der dargestellten Ausführungsform des Druckausgleichsventils 60 weist das erste Substrat 1 an der an das dritte Substrat 3 angrenzenden Seite zwei Aussparungen 61a und 61b auf, welche Fluidkanäle 61a' und 61b' für das Steuerfluid, also für Luft, bilden. Die Aussparungen 61a und 61b sind dabei benachbart angeordnet und durch einen Steg 62 getrennt. In dem zweiten Substrat 2 ist eine weitere Aussparung 63 vorgesehen, welche auf der dem dritten Substrat 3 abgewandten Seite des zweiten Substrats 2 angeordnet ist und zwar derart, dass sie sich zumindest in Teilbereichen mit den beiden Aussparungen 61 a und 61 b überlappt. Die Tiefe der Aussparung, das heißt die Ausdehnung der weiteren Aussparung 63 in Richtung zum elastischen Substrat 3 hin, ist dabei derart festgelegt, dass sich zwischen der weiteren Aussparung 63 und dem dritten Substrat ein stegartiger Bereich 64 des zweiten Substrates 2 ergibt, welcher einen verformbaren Teil der Außenwand des zweiten Substrates 2 bildet. Ein Aktivierungsglied 65 eines Aktuators kann auf den stegartigen Bereich 64 des zweiten Substrats 2 derart einwirken, dass der stegartige Bereich 64 in Richtung des dritten Substrats 3 und damit das dritte Substrat 3 auf den Steg 62 zwischen den beiden Aussparungen 61a und 61b gedrückt wird. Das wiederum führt zu einem Schließen des Druckausgleichsventils.

Um einen Druckausgleich zwischen dem pneumatischen System und der Außenumgebung zu ermöglichen, ist die Aussparung 61a über einen zweiten Druckausgleichskanal 67 mit der Außenumgebung verbunden. Dies wird dadurch erreicht, dass sich der zweite Druckausgleichskanal 67 bis zum Rand des mikrofluidischen Bauelementes oder im Falle eines Chips bis zum Rand des Chips erstreckt Über einen ersten Druckausgleichskanal 66 ist die Aussparung 61 b mit dem pneumatischen System, das heißt mit einer der Steuerkammern 4' oder 8' oder mit dem Steuerkanal 9' verbunden. Auf diese Weise ergibt sich bei geöffnetem Druckausgleichsventil ein Druckausgleich zwischen dem pneumatischen System und der Außenumgebung. Vor Inbetriebnahme, das heißt Aktuierung des mikrofluidischen Bauelementes oder des Chips kann das Druckausgleichsventil 60 dann verschlossen werden, so dass eine zuverlässige Funktion sichergestellt ist.

Um ein sicheres Schließen des Druckausgleichsventils 60 zu gewährleisten, kann an der dem stegartigen Bereich 64 des zweiten Substrats 2 zugewandten Seite des Aktivierungsgliedes ein elastischer Formkörper 68, z.B. in Form eines Elastomerpads, angeordnet sein.

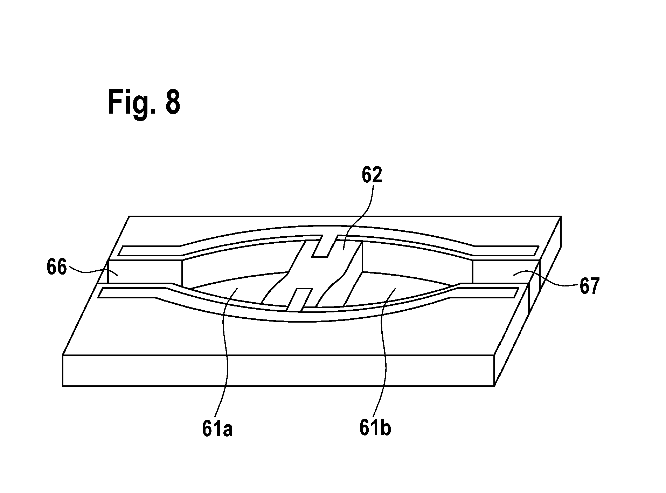

Um andererseits zu gewährleisten, dass das Druckausgleichsventil 60 im geöffneten Zustand sicher einen Luftfluß zwischen der Außenumgebung und dem pneumatischen System des mikrofluidischen Bauelementes zulässt, kann der Steg 62 zwischen den beiden Aussparungen 61a und 61 b leicht gekrümmt ausgeführt sein (siehe Figur 8). Die Krümmung ist dabei derart ausgestaltet, dass der mittlere Bereich des Steges einen vergrößerten Abstand zum dritten Substrat 3 aufweist als die äußeren Bereiche. Der Steg 62 ist insofern konkav ausgeformt. Ein derart ausgestalteter Steg 62 kann dabei z.B. mit Hilfe von Schweißnähten 80 mit dem ersten Substrat 1 verbunden werden.

Neben der in den Figuren 6 bis 8 dargestellten Ausführungsform des Druckausgleichsventils 60 sind selbstverständlich auch weitere Ausführungsformen denkbar, welche ein Fachmann durch entsprechende Anpassungen hinsichtlich Anordnung und Ausgestaltung der Fluidkanäle 61 a' und 61 b' sowie der Aussparung 63 ohne weiteres realisieren kann.

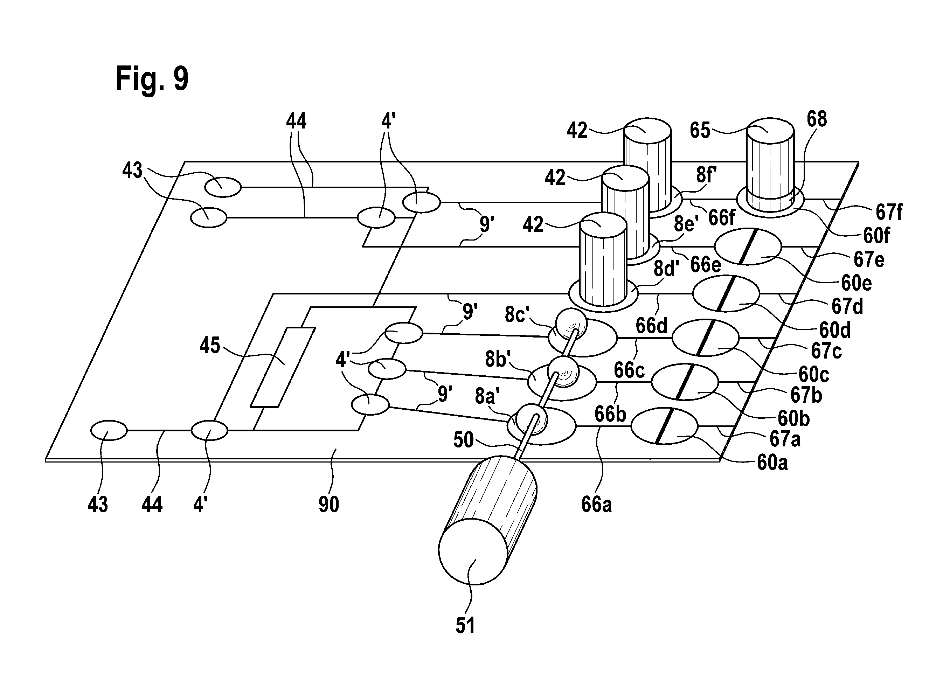

Figur 9 zeigt schließlich schematisch eine perspektivische Ansicht eines mikrofluidischen Chips 90 ähnlich dem gemäß Figur 5, wobei zusätzliche Druckausgleichsventile 60a-f vorgesehen sind, welche über erste Druckausgleichskanäle 66a-f mit den zweiten Steuerkammern 8a' bis 8f' und über zweite Druckausgleichskanäle 67a-f mit der Außenumgebung des Chips verbunden sind. Zum besseren Verständnis sind bei den Druckausgleichsventilen 60a-f auch die Stege 62a-f angedeutet, welche aber bei eines Ausführungsform der Druckausgleichventile gemäß den Figuren 6 und 7 aufgrund des stegartigen Bereichs 64 des zweiten Substrats 2 in der Realität nicht sichtbar wären. Beispielhaft ist auch eines der Aktivierungsglieder 65 des Druckausgleichsventils inklusive eines Elastomerpads 68 dargestellt.

Das Verschließen eines Druckausgleichsventils vor Inbetriebnahme des mikrofluidischen Bauelementes auf dem Chip kann selbstverständlich aktiv erfolgen. Vorteilhaft sind aber das Druckausgleichsventil (60), das Aktivierungsglied (65) und das Bediengerät derart ausgestaltet, dass das Druckausgleichsventil (60) beim Einlegen in das Bediengerät automatisch geschlossen wird. Dies kann beispielsweise durch Verwendung überfederter Stifte oder auch fest angebrachter Gummipuffer erreicht werden.

## Patentansprüche

1. Mikrofluidisches Bauelement zur Handhabung eines Fluids, insbesondere Mikropumpe, Mikroventil oder Mikromischer, mit einem ersten Substrat (1), einem zweiten Substrat (2) und einem zwischen dem ersten Substrat (1) und dem zweiten Substrat (2) angeordneten dritten Substrat (3), welches aus einem elastischen Material ausgebildet ist, wobei
auf der dem dritten Substrat (3) zugewandten Seite des ersten Substrats (1) mindestens eine erste Aussparung (4) ausgebildet ist, welche eine erste Steuerkammer (4') bildet,
mindestens eine zweite Aussparung (5a; 5b) ausgebildet ist, welche einen Fluidkanal oder eine Fluidkammer (5a'; 5b') für das zu handhabende Fluid bildet und welche sich mit der ersten Steuerkammer (4') zumindest in Teilbereichen überlappt,
- in dem ersten Substrat (1) eine von der ersten Steuerkammer (4') räumlich getrennte zweite Steuerkammer (8') und ein Steuerkanal (9'), welcher die erste Steuerkammer (4') mit der zweiten Steuerkammer (8') verbindet, ausgebildet sind,
- die Steuerkammern (4', 8') und der Steuerkanal (9') mit einem Steuerfluid gefüllt sind und zumindest eine Seitenwand der zweiten Steuerkammer (8') aus elastischem Material ausgebildet ist und durch einen Aktuator, insbesondere ein mechanisches Aktivierungsglied (11) eines Aktuators, derart verformbar ist, dass sich das Innenvolumen der zweiten Steuerkammer (8') verringert, **dadurch gekennzeichnet, dass** die zweite Aussparung (5a; 5b) auf der dem dritten Substrat (3) zugewandten Seite des zweiten Substrats (2) ausgebildet ist, und dass auf der dem dritten Substrat (3)
zugewandten Seite des ersten Substrats (1) mindestens eine siebte Aussparung (61a, 61b) ausgebildet ist, welche ein Druckausgleichsventil bildet, welches über einen ersten Druckausgleichskanal (66) mit der ersten Steuerkammer (4'), der zweiten Steuerkammer (8') oder dem Steuerkanal (9') verbunden ist und über einen zweiten Druckausgleichkanal (67) mit der Außenumgebung verbunden ist.

2. Mikrofluidisches Bauelement nach Anspruch 1, wobei die zweite Steuerkammer (8') durch eine dritte Aussparung (8) gebildet ist, welche auf der dem dritten Substrat (3) zugewandten Seite des ersten Substrats (1) ausgebildet ist.

3. Mikrofluidisches Bauelement nach Anspruch 2, wobei der Steuerkanal (9') durch eine vierte Aussparung (9) gebildet ist, welche auf der dem dritten Substrat (3) zugewandten Seite des ersten Substrats (1) zwischen der ersten Aussparung (4) und der dritten Aussparung (8) ausgebildet ist.

4. Mikrofluidisches Bauelement nach einem der vorhergehenden Ansprüche, wobei die verformbare Seitenwand der zweiten Steuerkammer (8') durch das dritte Substrat (3) gebildet ist.

5. Mikrofluidisches Bauelement nach einem der Ansprüche 1 bis 3, wobei die verformbare Seitenwand der zweiten Steuerkammer (8') durch eine Außenwand des ersten Substrats (1) gebildet ist.

6. Mikrofluidisches Bauelement nach einem der vorhergehenden Ansprüche, wobei das mikrofluidische Bauelement mit dem Aktuator lose verbindbar ist.

7. Mikrofluidisches Bauelement nach einem der vorhergehenden Ansprüche, wobei der Aktuator elektrisch oder magnetisch oder piezoelektrisch oder durch ein elektroaktives Polymer angetrieben ist.

8. Mikrofluidischer Chip, insbesondere Biochip, umfassend wenigstens ein mikrofluidisches Bauelement nach einem der Ansprüche 1 bis 7.

## Claims

1. Microfluidic component, more particularly a micropump, microvalve or micromixer, for manipulating a fluid, having a first substrate (1), a second substrate (2) and a third substrate (3), which is arranged between the first substrate (1) and the second substrate (2) and made of an elastic material, wherein
- at least one first recess (4) is made in the side of the first substrate (1) which faces the third substrate (3), said recess forming a first control chamber (4'),
- at least one second recess (5a; 5b) is made, said recess forming a fluid channel or a fluid chamber (5a'; 5b'), which is for the fluid to be manipulated and at least in portions overlaps with the first control chamber (4'),
- a second control chamber (8'), which is spatially separated from the first control chamber (4'), and a control channel (9'), which connects the first control chamber (4') to the second control chamber (8'), are made in the first substrate (1),
- the control chambers (4', 8') and the control channel (9') are filled with a control fluid and
- at least one sidewall of the second control chamber (8') is made of elastic material and can be deformed by an actuator, more particularly a mechanical activation member (11) of an actuator, such that the internal volume of the second control chamber (8') is reduced, **characterized in that** the second recess (5a; 5b) is made in the side of the second substrate (2) which faces the third substrate (3) and **in that** at least one seventh recess (61a, 61b) is made in the side of the first substrate (1) which faces the third substrate (3), said seventh recess forming a pressure compensation valve, which, via a first pressure compensation channel (66), is connected to the first control chamber (4'), the second control chamber (8') or the control channel (9') and connected to the external surroundings via a second pressure compensation channel (67).

2. Microfluidic component according to Claim 1, wherein the second control chamber (8') is formed by a third recess (8), which is made in the side of the first substrate (1) which faces the third substrate (3).

3. Microfluidic component according to Claim 2, wherein the control channel (9') is formed by a fourth recess (9), which is made between the first recess (4) and the third recess (8) in the side of the first substrate (1) which faces the third substrate (3).

4. Microfluidic component according to one of the preceding claims, wherein the deformable sidewall of the second control chamber (8') is formed by the third substrate (3).

5. Microfluidic component according to one of Claims 1 to 3, wherein the deformable sidewall of the second control chamber (8') is formed by an outer wall of the first substrate (1).

6. Microfluidic component according to one of the preceding claims, wherein the microfluidic component can be loosely connected to the actuator.

7. Microfluidic component according to one of the preceding claims, wherein the actuator is driven electrically or magnetically or piezoelectrically or by an electroactive polymer.

8. Microfluidic chip, more particularly a biochip, comprising at least one microfluidic component according to one of Claims 1 to 7.

## Revendications

1. Elément structural micro-fluidique conçu pour la manipulation d'un fluide, en particulier micro-pompe, micro-soupape ou micro-mélangeur, avec un premier substrat (1), un deuxième substrat (2) et un troisième substrat (3) disposé entre le premier substrat (1) et le deuxième substrat (2), qui est constitué d'un matériau élastique, dans lequel
- au moins un premier évidement (4), qui forme une première chambre de commande (4'), est pratiqué sur le côté du premier substrat (1) tourné vers le troisième substrat (3),
- au moins un deuxième évidement (5a; 5b) est réalisé, qui forme un canal de fluide ou une chambre de fluide (5a'; 5b') pour le fluide à manipuler et qui est en recouvrement avec la première chambre de commande (4') au moins dans des régions partielles,
- dans le premier substrat (1) sont réalisés une deuxième chambre de commande (8') spatialement séparée de la première chambre de commande (4') et un canal de commande (9'), qui relie la première chambre de commande (4') à la deuxième chambre de commande (8').
- les chambres de commande (4', 8') et le canal de commande (9') sont remplis d'un fluide de commande, et
- au moins une paroi latérale de la deuxième chambre de commande (8') est réalisée en matériau élastique et est déformable au moyen d'un actionneur, en particulier un organe d'activation mécanique (11) d'un actionneur, de telle manière que le volume intérieur de la deuxième chambre de commande (8') diminue,
**caractérisé en ce que** le deuxième évidement (5a; 5b) est pratiqué sur le côté du deuxième substrat (2) tourné vers le troisième substrat (3) et **en ce qu'**au moins un septième évidement (61a, 61b) est pratiqué sur le côté du premier substrat (1) tourné vers le troisième substrat (3) et forme une soupape d'équilibrage de pression, qui est reliée par un premier canal d'équilibrage de pression (66) à la première chambre de commande (4'), à la deuxième chambre de commande (8') ou au canal de commande (9') et qui est reliée par un deuxième canal d'équilibrage de pression (67) à l'environnement extérieur.

2. Elément structural micro-fluidique selon la revendication 1, dans lequel la deuxième chambre de commande (8') est formée par un troisième évidement (8), qui est pratiqué sur le côté du premier substrat (1) tourné vers le troisième substrat (3).

3. Elément structural micro-fluidique selon la revendication 2, dans lequel le canal de commande (9') est formé par un quatrième évidement (9), qui est pratiqué sur le côté du premier substrat (1) tourné vers le troisième substrat (3) entre le premier évidement (4) et le troisième évidement (8).

4. Elément structural micro-fluidique selon l'une quelconque des revendications précédentes, dans lequel la paroi latérale déformable de la deuxième chambre de commande (8') est formée par le troisième substrat (3).

5. Elément structural micro-fluidique selon l'une quelconque des revendications 1 à 3, dans lequel la paroi latérale déformable de la deuxième chambre de commande (8') est formée par une paroi extérieure du premier substrat (1).

6. Elément structural micro-fluidique selon l'une quelconque des revendications précédentes, dans lequel l'élément structural micro-fluidique peut être relié librement à l'actionneur.

7. Elément structural micro-fluidique selon l'une quelconque des revendications précédentes, dans lequel l'actionneur est entraîné par voie électrique ou magnétique ou piézoélectrique ou par un polymère électro-actif.

8. Puce micro-fluidique, en particulier biopuce, comprenant au moins un élément structural micro-fluidique selon l'une quelconque des revendications 1 à 7.
